# FASCICULE DE BREVET EUROPEEN

(11) **EP 1 394 002 B1**
(45) Date de publication et mention de la délivrance du brevet: **07.05.2008**
(21) Numéro de dépôt: 03292027.4
(22) Date de dépôt: 13.08.2003
(51) Int. Cl.: B60R 22/24, B60R 22/195, B60R 22/02

(54) **Dispositif de prétention d'une ceinture de sécurité, siège de véhicule automobile et véhicule automobile comprenant un tel dispositif**
Sicherheitsgurtanordnung mit Straffervorrichtung , Autositz und Auto mit derartiger Anordnung
Saftey belt pretensioner device, car seat and car comprising such a device

(30) Priorité: 14.08.2002 FR 0210328
(43) Date de publication de la demande: 03.03.2004
(73) Titulaire: RENAULT S.A.S., 92100 Boulogne Billancourt (FR)
(72) Inventeur: Aoudia, Said, 92100 Boulogne Billancourt (FR); Montfort, Patrice, 78280 Guyancourt (FR)

(56) Documents cités:
- DE-A- 3 420 397
- DE-A- 19 629 366
- GB-A- 2 367 039
- US-A1- 2002 089 164

## Description

### DOMAINE TECHNIQUE

La présente invention se rapporte de façon générale à une ceinture de sécurité de siège de véhicule automobile, et plus particulièrement à un dispositif de prétension situé au niveau de l'ancrage latéral inférieur de la sangle.

L'invention trouve plus particulièrement une application pour les véhicules automobiles du type comportant trois portes, dont l'ancrage latéral inférieur de la sangle est habituellement constitué par une rampe de guidage, le long de laquelle une extrémité inférieure de cette sangle est apte à se déplacer.

### ETAT DE LA TECHNIQUE ANTERIEURE

Les dispositifs de prétension de sangle de ceinture de sécurité on déjà fait l'objet de nombreuses réalisations dans l'art antérieur.

On connaît en effet les dispositifs de prétension classiques, destinés à plaquer la sangle contre l'occupant du siège, lors d'un choc du véhicule.

La fonction de plaquage est généralement assurée par un vérin pyrotechnique déclenché suite à un choc survenu sur le véhicule, provoquant une mise sous tension de la sangle. A titre d'exemple, la mise sous tension de la sangle peut être obtenue par actionnement d'une crémaillère engendrant la rotation d'une roue directement reliée à l'enrouleur de la ceinture de sécurité, de sorte que la rotation de la roue engendre l'enroulement d'une longueur déterminée de sangle autour de l'enrouleur.

Comme cela vient d'être mentionné, les dispositifs de prétension classiques peuvent être montés de manière à agir sur l'enrouleur constituant un premier point d'ancrage de la ceinture, mais également au niveau d'un ancrage latéral inférieur, lorsque ce dernier est fixe par rapport au siège du véhicule.

Ainsi, il devient possible d'équiper la ceinture de sécurité d'un second dispositif de prétension, dont la fonction principale réside dans le plaquage de la partie ventrale de l'occupant du siège du véhicule.

Cependant, tous les véhicules automobiles ne disposent pas nécessairement d'un ancrage latéral inférieur fixe par rapport au siège du véhicule.

En effet, principalement dans les véhicules du type comprenant trois portes, l'ancrage latéral inférieur est constitué d'une rampe de guidage, le long de laquelle une extrémité inférieure de la sangle est apte à se déplacer. Notons que cette rampe de guidage est essentiellement prévue d'une part pour permettre à la sangle de coulisser jusqu'à une extrémité arrière de la rampe de guidage afin de ne pas gêner une personne désirant monter à l'arrière du véhicule trois portes, et d'autre part pour respecter les règlements de sécurité relatifs à l'inclinaison de la portion de sangle attachée à l'ancrage latéral inférieur, quelle que soit la position d'avancement du siège par rapport au châssis.

GB 2367039 A décrit un prétendeur d'une ceinture de sécurité selon le préambule de revendication 1.

Or pour un tel système de coulissement de l'extrémité inférieure de la sangle, notamment décrit dans le document FR-A-2 646 641 où l'extrémité inférieure de la sangle est apte à être immobilisée longitudinalement le long de la rampe de guidage dans une position compatible avec celle du siège, les dispositifs de prétension classiques de l'art antérieur restent totalement inadaptés.

Ainsi, aucune solution technologique envisageable industriellement n'a encore été apportée pour prévoir un ancrage latéral inférieur coulissant muni d'un dispositif de prétension de sangle, autorisant un plaquage de la partie ventrale d'un occupant d'un siège de véhicule automobile.

### EXPOSÉ DE L'INVENTION

L'invention a donc pour but de proposer un dispositif de prétension d'une ceinture de sécurité de siège de véhicule automobile, le dispositif étant adapté pour fonctionner avec une ceinture de sécurité comprenant une sangle dont une extrémité inférieure est apte à être déplacée le long d'une rampe de guidage.

Un autre but de l'invention est de présenter une ceinture de sécurité pour siège de véhicule automobile, ainsi qu'un véhicule automobile équipés d'un dispositif de prétension tel que celui répondant au but mentionné ci-dessus.

Pour ce faire, l'invention a pour objet un dispositif de prétension d'une ceinture de sécurité de siège de véhicule automobile, la ceinture comprenant une sangle dont une extrémité inférieure est apte à être déplacée le long d'une rampe de guidage. Selon l'invention, le dispositif comprend des moyens de mise en mouvement de la rampe de guidage, susceptibles d'engendrer une mise sous tension de la sangle de la ceinture de sécurité.

Avantageusement, les moyens de mise en mouvement prévus sur le dispositif selon l'invention et provoquant le déplacement et la tension de la sangle sont couplés à des moyens déjà existants de la ceinture de sécurité, à savoir en particulier la rampe de guidage constituant l'ancrage latéral inférieur. Un simple déplacement approprié de cette rampe permet en effet de provoquer un plaquage de la sangle contre l'occupant du siège, quelle que soit la manière dont cette rampe est montée sur le véhicule. Ainsi, le dispositif de prétension proposé est indifféremment adaptable aux ceintures de sécurité dont la rampe de guidage est fixe par rapport à la caisse du véhicule, ou mobile en fonction de l'avancement du siège équipé d'une telle ceinture.

Selon un premier mode de réalisation préféré de la présente invention, les moyens de mise en mouvement sont aptes à mettre la rampe de guidage en mouvement par déplacement d'une liaison pivot située entre le siège et des moyens de butée de l'extrémité inférieure de la sangle, les moyens de butée étant montés sur une extrémité avant de la rampe de guidage par l'intermédiaire d'une liaison glissière, et une extrémité arrière de la rampe de guidage étant montée sur la caisse du véhicule par l'intermédiaire d'une liaison comprenant au moins un degré de liberté de rotation.

De façon avantageuse, les moyens de mise en mouvement sont simplement conçus pour provoquer le déplacement d'une liaison pivot située entre deux éléments placés au niveau du siège, et peuvent par conséquent être choisis parmi des moyens d'actionnement pyrotechniques classiques, par exemple du type vérin pyrotechnique apte à engendrer un déplacement sensiblement linéaire. Les moyens de mise en mouvement pourront alors être avantageusement réalisés de manière à déplacer la liaison pivot sensiblement en direction du châssis du véhicule.

Selon un second mode de réalisation préféré de la présente invention, les moyens de mise en mouvement sont aptes à mettre la rampe de guidage en mouvement par déplacement d'une liaison pivot située entre le siège et une extrémité avant de la rampe de guidage, un organe de guidage étant alors monté d'une part sur une extrémité arrière de la rampe de guidage par l'intermédiaire d'une liaison glissière, et d'autre part sur la caisse du véhicule par l'intermédiaire d'une liaison comprenant au moins un degré de liberté de rotation. De la même manière, les moyens de mise en mouvement pourront alors être avantageusement réalisés de manière à déplacer la liaison pivot sensiblement en direction du châssis du véhicule.

Préférentiellement, le dispositif de prétension présenté est susceptible d'équiper une ceinture de sécurité dont l'extrémité inférieure de la sangle est une boucle fermée, apte à coulisser le long de la rampe de guidage.

D'autre part, une autre possibilité pourrait consister à prévoir que le dispositif comprend des moyens de retenu d'une partie libre d'une boucle ouverte constituant l'extrémité inférieure de la sangle, les moyens de retenu étant solidaires de la partie libre de la boucle et aptes à être bloqués en translation par rapport au siège du véhicule, lors de la mise sous tension de la sangle provoquée par les moyens de mise en mouvement du dispositif. De cette manière, l'extrémité libre de la boucle ouverte étant elle aussi bloquée en translation par rapport au siège, la mise en mouvement de la rampe de guidage permet de doubler la longueur de sangle déplacée, par rapport à un à assemblage où l'extrémité inférieure de la sangle serait constituée d'une boucle fermée coulissante sur la rampe de guidage.

Dans un tel cas, les moyens de retenu comprennent de façon préférée un organe faisant saillie apte à s'engager automatiquement dans une rainure pratiquée dans le siège du véhicule, lors du coulissement de la boucle ouverte constituant l'extrémité inférieure de la sangle, le long de la rampe de guidage. De plus, les moyens de retenu peuvent être solidaires d'une portion souple en forme de boucle ouverte, épousant l'extrémité inférieure de la sangle de la ceinture de sécurité. Ainsi, la portion souple est réalisée de sorte qu'elle est apte d'une part à maintenir la liaison entre l'extrémité inférieure de la sangle et la rampe de guidage lorsque l'organe faisant saillie n'est pas engagé dans la rainure du siège, et d'autre part à se déformer lors du déplacement de la rampe de guidage provoqué par les moyens de mise en mouvement de cette dernière.

Par ailleurs, l'invention a également pour objet une ceinture de sécurité pour siège de véhicule automobile, équipée d'un dispositif de prétension tel que celui décrit ci-dessus.

Enfin, un autre objet de l'invention concerne un véhicule automobile équipé d'au moins un dispositif de prétension tel que celui décrit ci-dessus.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique partielle de côté d'un véhicule automobile comprenant un dispositif de prétension d'une ceinture de sécurité de siège, selon un premier mode de réalisation préféré de la présente invention ;
- la figure 2 représente une vue schématique partielle de côté, à plus grande échelle, du véhicule automobile représenté sur la figure 1, expliquant le fonctionnement du dispositif de prétension;
- la figure 3 représente une vue schématique partielle de côté d'un véhicule automobile, expliquant le fonctionnement d'un dispositif de prétension selon un second mode de réalisation préféré de la présente invention ;
- la figure 4 représente une vue schématique partielle de côté d'un véhicule automobile, expliquant le fonctionnement d'un dispositif de prétension selon un autre mode de réalisation préféré de la présente invention ;
- la figure 5 représente une vue en coupe prise le long de la ligne V-V de la figure 4.

### EXPOSÉ DÉTAILLÉ DE MODES DE RÉALISATION PRÉFÉRÉS

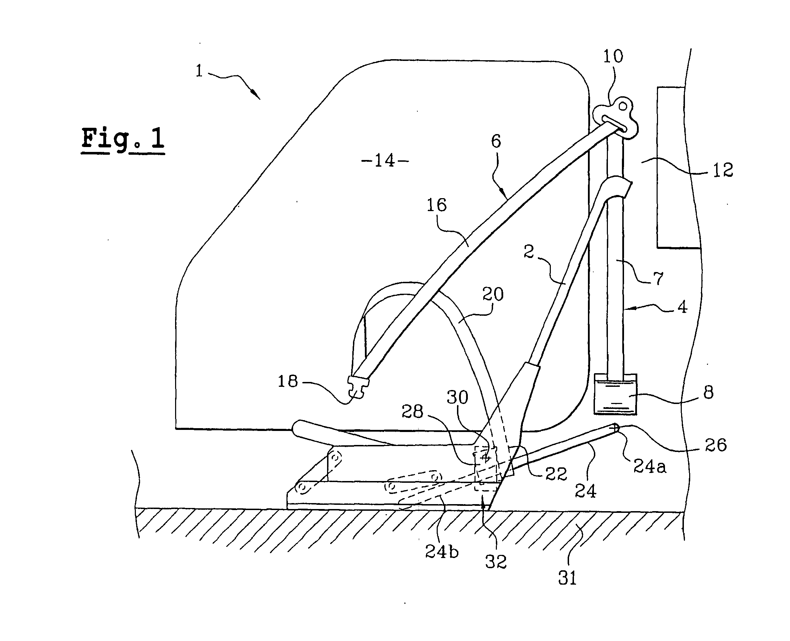

La figure 1 représente une partie d'un véhicule automobile 1 du type comprenant trois portes, dont l'un des sièges avant 2 coopère avec une ceinture de sécurité référencée de façon générale par la référence numérique 4.

La ceinture de sécurité 4 comprend une sangle 6 comportant une portion 7 s'étendant entre un enrouleur 8 et une ferrure de coulissement 10, celle-ci formant un ancrage latéral supérieur. Comme cela est visible sur la figure 1, la ferrure de coulissement 10 est fixée sur le montant arrière 12 d'une ouverture de porte avant 14.

A partir de la ferrure de coulissement 10, la sangle 6 comprend une portion 16 s'étendant obliquement sous la forme d'une sangle diagonale portant un pêne mobile 18, qui divise la sangle 6 pour former une portion ventrale 20.

Une extrémité inférieure 22 de la sangle 6, à savoir l'extrémité inférieure 22 de la portion ventrale 20 de la sangle 6, est apte à être déplacée le long d'une rampe de guidage 24 formant glissière.

Dans ce mode de réalisation, la rampe de guidage 24 dispose d'une extrémité arrière 24a reliée à la caisse du véhicule 1, par l'intermédiaire d'une liaison pivot ou rotule 26.

Par ailleurs, une extrémité avant 24b de la rampe de guidage 24 est reliée à des moyens de butée 28 par l'intermédiaire d'une liaison glissière, ces moyens de butée 28 étant pour leur part reliés au siège 2 du véhicule 1, par l'intermédiaire d'une liaison pivot 30.

De cette manière, comme cela est décrit dans le document FR-A-2 646 641, les moyens de butée 28, destinés à stopper le coulissement de l'extrémité inférieure 22 de la sangle 6 sur la rampe de guidage 24, se déplacent conjointement avec le siège 2 lorsque celui-ci est déplacé par rapport au châssis 31 du véhicule 1, en raison de la liaison pivot 30 reliant les deux éléments. Notons qu'un tel déplacement du siège 2 est principalement opéré pour adapter la position du siège à la taille du conducteur ou du passager. De cette façon, quelle que soit la position du siège 2, l'extrémité inférieure 22 de la sangle 6 vient toujours sensiblement en butée à un même emplacement par rapport au siège 2. Ainsi, en toutes circonstances, il est possible de conserver un angle d'inclinaison de la portion 20 de la sangle 6 respectant les normes de sécurité en vigueur.

En outre, notons que la rampe de guidage 24 permet à l'extrémité inférieure 22 de la sangle 6 de coulisser jusqu'à l'extrémité arrière 24a de cette rampe 24, afin de ne pas gêner le passage d' une personne empruntant l'ouverture de porte avant 14 pour monter à l'arrière du véhicule 1.

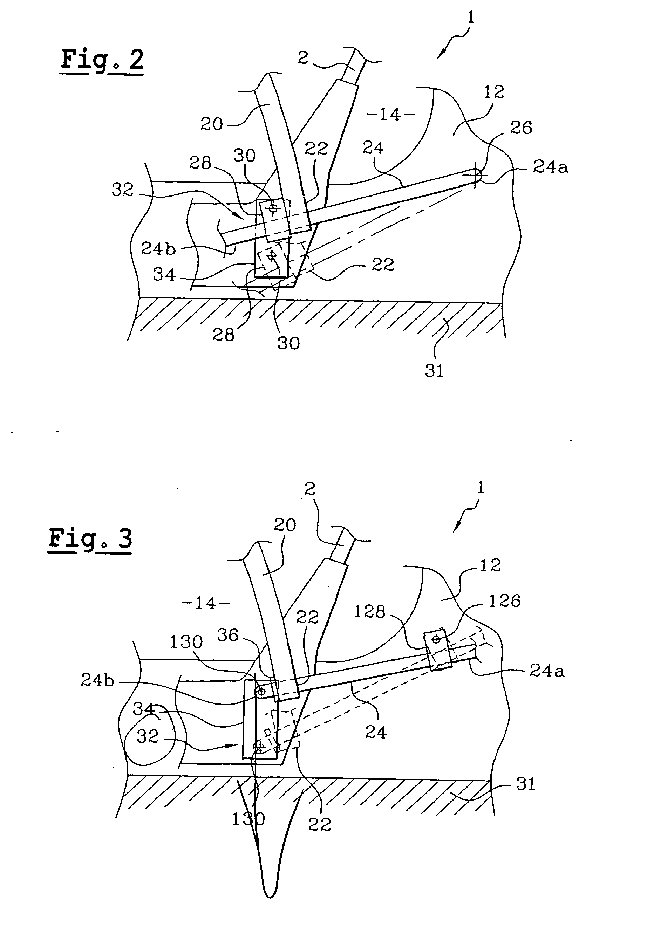

En référence à la figure 2, on voit un dispositif de prétension 32 selon un premier mode de réalisation préféré de la présente invention.

Le dispositif 32 comporte essentiellement des moyens de mise en mouvement 34 de la rampe de guidage 24, ces moyens de mise en mouvement 34 étant susceptibles, lorsqu'ils sont actionnés, d'engendrer une mise sous tension de la sangle 6, par déplacement de celle-ci.

Les moyens de mise en mouvement 34 sont de préférence intégrés au siège 2 du véhicule 1, et aptes à déplacer la liaison pivot 30 située entre les moyens de butée 28 et le siège 2. Préférentiellement, ces moyens 34 prennent la forme de moyens d'actionnement pyrotechniques classiques, par exemple du type vérin pyrotechnique, aptes à déplacer la liaison pivot 30 sensiblement verticalement, en direction du châssis 31 du véhicule 1.

Dans un tel cas de figure, lorsque les moyens de mise en mouvement 34 sont actionnés suite à la détection d'un choc sur le véhicule 1, la liaison pivot 30 est déplacée vers le bas. Cela entraîne alors une rotation vers le bas de la rampe de guidage 24 autour de la liaison pivot 26, autorisée par le coulissement de cette rampe 24 à travers les moyens de butées 28, également déplacés lors de l'actionnement des moyens de mise en mouvement 34. De cette manière, l'extrémité inférieure 22 de la sangle 6 est également déplacée vers le bas avec la rampe de guidage 24, et par conséquent mise sous tension contre l'occupant du siège 2. Il est précisé que la mise sous tension de la sangle 6 est plus particulièrement localisée au niveau de sa portion 20, destinée à retenir la partie ventrale de l'occupant du siège 2.

Notons comme cela est visible sur la figure 2 que durant le déplacement de la liaison pivot 30, l'extrémité inférieure 22 reste toujours en contact avec les moyens de butée 28.

Selon un second mode de réalisation préféré du dispositif de prétension 32 selon l'invention et en référence à la figure 3, les moyens de mise en mouvement 34 de la rampe de guidage 24 sont couplés à une liaison pivot 130, située entre l'extrémité avant 24b de cette rampe et le siège 2 du véhicule 1, et susceptible d'être déplacée sensiblement verticalement en direction du châssis 31 du véhicule 1. En outre, l'extrémité arrière 24a de la rampe 24 est montée de façon coulissante sur un organe de guidage 128, lui-même monté sur le châssis 31 du véhicule 1 à l'aide d'une liaison pivot ou rotule 126.

Par ailleurs, la rampe de guidage 24 est munie au niveau de son extrémité avant 24b, d'un épaulement 36 formant butée pour l'extrémité inférieure 22 de la sangle 6, coulissant sur la rampe de guidage 24. Notons qu'une autre solution pourrait également consister à prévoir que la liaison pivot 130 remplisse elle-même la fonction de butée de l'extrémité inférieure 22, sans sortir du cadre de l'invention.

De la même façon que dans le premier mode de réalisation préféré décrit ci-dessus, lorsque les moyens de mise en mouvement 34 sont actionnés suite à la détection d'un choc sur le véhicule 1, l'extrémité avant 24b est déplacée vers le bas. Ce déplacement est rendu possible grâce au coulissement de la rampe de guidage 24 à travers l'organe de guidage 128, ainsi que grâce à la rotation de cet organe de guidage 128 autour de la liaison pivot ou rotule 126. Par conséquent, l'extrémité inférieure 22 de la sangle 6 est également déplacée vers le bas avec la rampe de guidage 24, tout en restant en contact avec l'épaulement 36 servant de butée. Ceci provoque une mise sous tension de la sangle 6 contre l'occupant du siège 2, la tension obtenue étant alors fonction de la course de prétension de la sangle 6, elle-même dépendante de la distance de déplacement de la liaison pivot 130.

Dans les deux premiers modes de réalisation préférés qui viennent d'être décrits, l'extrémité inférieure 22 de la sangle 6 forme préférentiellement une boucle fermée apte à coulisser le long de la rampe de guidage 24. Il est précisé que sans sortir du cadre de l'invention, il serait également possible de prévoir une boucle fermée annexe, montée solidairement sur l'extrémité inférieure 22 de la sangle 6.

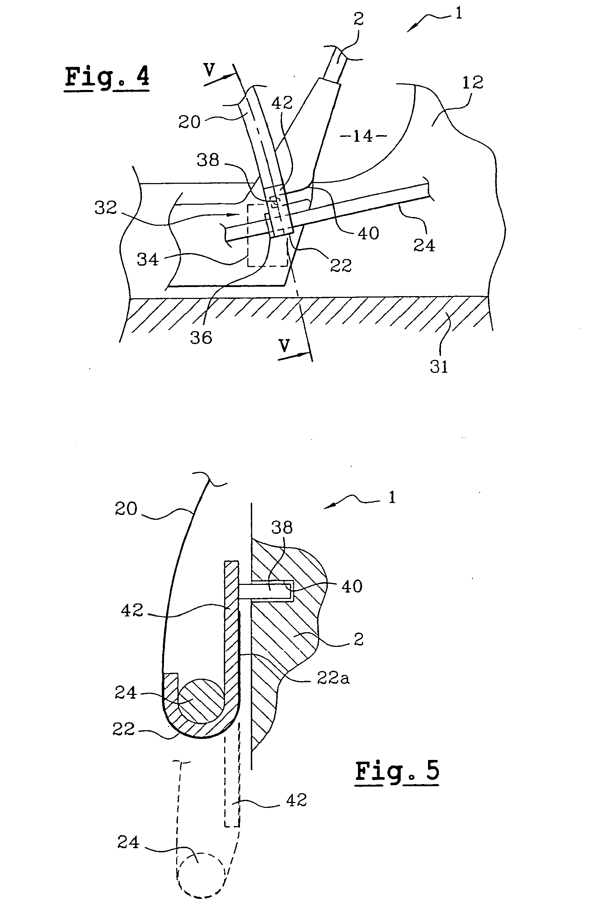

Cependant, en référence aux figures 4 et 5, il est également envisageable de prévoir que le dispositif de prétension 32 dispose de moyens de retenu 38 d'une partie libre 22a de l'extrémité inférieure 22, cette extrémité 22 formant non plus une boucle fermée, mais une boucle ouverte prenant place autour de la rampe de guidage 24.

Les moyens de retenu 38, solidaires de la partie libre 22a de l'extrémité 22 et aptes à être bloqués en translation par rapport au siège 2 lors de l'actionnement des moyens de mis en mouvement 34, sont préférentiellement constitués d'un organe faisant saillie 38.

L'organe faisant saillie 38 est par exemple du type téton, apte à s'engager dans une rainure 40 pratiquée dans le siège 2 du véhicule 1, lors du coulissement de l'extrémité inférieure 22 le long de la rampe de guidage 24. Notons que la rainure 40 est réalisée de sorte que lorsque l'extrémité inférieure 22 de la sangle 6 arrive en butée au niveau de l'extrémité avant 24b de la rampe 24, l'organe faisant saillie 38 se trouve au fond de la rainure 40.

D'autre part, les moyens de retenu 38 sont solidaires d'une portion souple 42 également en forme de boucle ouverte coopérant avec la rampe de guidage 24, et épousant l'extrémité inférieure 22 de la sangle 6 sur sensiblement toute la longueur de cette extrémité. Ainsi, comme cela est représenté sur la figure 5, la portion souple 42 est située entre la rampe de guidage 24 et la sangle 6, mais pourrait bien entendu se placer de manière à être épousée intérieurement par l'extrémité inférieure 22. Il est précisé que la portion souple 42 est solidaire d'une part de l'organe faisant saillie 38, et d'autre part de la partie libre 22a de l'extrémité inférieure 22 de la sangle 6. A titre d'exemple, la portion souple 42 pourra être collée et/ou cousue sur la partie libre 22a de l'extrémité 22 de la sangle 6.

Par ailleurs, notons que la portion souple 42 est réalisée de façon suffisamment rigide pour être apte à maintenir la liaison entre l'extrémité inférieure 22 de la sangle 6 et la rampe de guidage 24 lorsque l'organe faisant saillie 38 n'est pas engagé dans la rainure 40 du siège 2, afin d'assurer l'ancrage latéral inférieur de la ceinture 4.

De plus, lorsque l'organe faisant saillie 38 a pris place au fond de la rainure 40 et que les moyens de mis en mouvement 34 sont déclenchés, l'organe 38 constituant les moyens de retenu est bloqué en translation par rapport au siège 2, tandis que la portion souple 42 doit être suffisamment souple pour se déformer afin d'autoriser le mouvement de la rampe de guidage 24 vers le bas.

De cette manière, comme cela est visible en pointillés sur la figure 5 et en raison du blocage en translation de la partie libre 22a de l'extrémité 22 par rapport au siège 2, la longueur de sangle 6 déplacée suite à l'actionnement des moyens de mis en mouvement 34 est doublée par rapport à un assemblage où l'extrémité inférieure 22 de la sangle 6 serait constituée d'une boucle fermée coulissante sur la rampe de guidage 24. L'augmentation de la course de prétension de la sangle 6 permet alors de faire plus facilement face aux différentes contraintes géométriques rencontrées lors de la mise en oeuvre d'un tel assemblage.

Il est naturellement précisé que cet agencement particulier permettant de doubler la course de la sangle 6 est applicable pour les deux modes de réalisation préférés mentionnés ci-dessus.

## Revendications

1. Dispositif de prétension (32) d'une ceinture de sécurité (4) de siège (2) de véhicule automobile (1), ladite ceinture (4) comprenant une sangle (6) dont une extrémité inférieure (22) est apte à être déplacée le long d'une rampe de guidage (24), **caractérisé en ce que** le dispositif (32) comprend des moyens de mise en mouvement (34) de ladite rampe de guidage (24), susceptibles d'engendrer un pivotement, de ladite rampe (24) de manière à provoquer une mise sous tension de la sangle (6) de la ceinture de sécurité (4) .

2. Dispositif de prétension (32) selon la revendication 1, **caractérisé en ce que** les moyens de mise en mouvement (34) sont aptes à mettre la rampe de guidage (24) en mouvement par déplacement d'une liaison pivot (30) située entre le siège (2) et des moyens de butée (28) de l'extrémité inférieure (22) de la sangle (6), lesdits moyens de butée (28) étant montés sur une extrémité avant (24b) de la rampe de guidage (24) par l'intermédiaire d'une liaison glissière, et une extrémité arrière (24a) de la rampe de guidage (24) étant montée sur la caisse dudit véhicule (1) par l'intermédiaire d'une liaison (26) comprenant au moins un degré de liberté de rotation.

3. Dispositif de prétension (32) selon la revendication 2, **caractérisé en ce que** les moyens de mise en mouvement (34) sont aptes à déplacer la liaison pivot (30) sensiblement en direction du châssis (31) du véhicule (1).

4. Dispositif de prétension (32) selon la revendication 1, **caractérisé en ce que** les moyens de mise eh mouvement (34) sont aptes à mettre la rampe de guidage (24) en mouvement par déplacement d'une liaison pivot (130) située entre le siège (2) et une extrémité avant (24b) de la rampe de guidage (24), un organe de guidage (128) étant alors monté d'une part sur une extrémité arrière (24a) de la rampe de guidage (24) par l'intermédiaire d'une liaison glissière, et d'autre part sur la caisse dudit véhicule (1) par l'intermédiaire d'une liaison (126) comprenant au moins un degré de liberté de rotation.

5. Dispositif de prétension (32) selon la revendication 4, **caractérisé en ce que** les moyens de mise en mouvement (34) sont aptes à déplacer la liaison pivot (130) sensiblement en direction du châssis. (30) du véhicule (1).

6. Dispositif de prétension (32) selon l'une quelconque des revendications précédentes, **caractérisé en ce qu**'il est susceptible d'équiper une ceinture de sécurité (2) dont l'extrémité inférieure (22) de la sangle (6) est une boucle fermée, apte à coulisser le long de ladite rampe de guidage (24).

7. Dispositif de prétension (32) selon l'une quelconque des revendications 1 à 5, **caractérisé en ce qu**'il comprend des moyens de retenu (38) d'une partie libre (22a) d'une boucle ouverte constituant l'extrémité inférieure (22) de la sangle (6), lesdits moyens de retenu (38) étant solidaires de la partie libre (22a) de la boucle et aptes à être bloqués en translation par rapport audit siège (2) du véhicule (1), lors de la mise sous tension de la sangle (6) provoquée par les moyens de mise en mouvement (34) du dispositif (32).

8. Dispositif de prétension (32) selon la revendication 7, **caractérisé en ce que** les moyens de retenu (38) comprennent un organe faisant saillie apte à s'engager automatiquement dans une rainure (40) pratiquée dans ledit siège (2) du véhicule (1), lors du coulissement de la boucle ouverte constituant l'extrémité inférieure (22) de la sangle (6), le long de ladite rampe de guidage (24).

9. Dispositif de prétension (32) selon la revendication 7 ou la revendication 8, **caractérisé en ce que** les moyens de retenu (38) sont solidaires d'une portion souple (42) en forme de boucle ouverte, épousant l'extrémité inférieure (22) de la sangle (6) de la ceinture de sécurité (4).

10. Dispositif de prétension (32) selon l'une quelconque des revendications précédentes, **caractérisé en ce que** les moyens de mise en mouvement (34) sont des moyens d'actionnement pyrotechniques.

11. Ceinture de sécurité (4) pour siège (2) de véhiculé automobile (1), **caractérisé en ce qu**'elle est équipée d'un dispositif de prétension (32) selon l'une quelconque des revendications précédentes.

12. Véhicule automobile (1), **caractérisé en ce qu**'il est équipé d'au moins un dispositif de prétension (32) selon l'une quelconque des revendications 1 à 10.

## Claims

1. Pretensioner device (32) for a safety belt (4) of a seat (2) of a motor vehicle (1), the said belt (4) comprising a strap (6) a lower end (22) of which can be moved along a guide ramp (24), **characterized in that** the device (32) comprises means (34) for setting the said guide ramp (24) in motion, these means being capable of causing the said ramp (24) to pivot in such a way as to tension the strap (6) of the safety belt (4).

2. Pretensioner device (32) according to Claim 1, **characterized in that** the motion-instigating means (34) are capable of setting the guide ramp (24) in motion by moving a pivot connection (30) situated between the seat (2) and stop means (28) for the lower end (22) of the strap (6), the said stop means(28) being mounted on a front end (24b) of the guide ramp (24) via a slideway connection, and a rear end (24a) of the guide ramp (24) being mounted on the body of the said vehicle (1) via a connection (26) that has at least one degree of freedom in rotation.

3. Pretensioner device (32) according to Claim 2, **characterized in that** the motion-instigating means (34) are able to move the pivot connection (30) substantially towards the chassis (31) of the vehicle (1).

4. Pretensioner device (32) according to Claim 1, **characterized in that** the motion-instigating means (34) are capable of setting the guide ramp (24) in motion by moving a pivot connection (130) situated between the seat (2) and a front end (24b) of the guide ramp (24), a guide member (128) therefore being mounted, on the one hand, on a rear end (24a) of the guide ramp (24) via a slideway connection and, on the other hand, on the body of the said vehicle (1) via a connection (126) comprising at least one degree of freedom in rotation.

5. Pretensioner device (32) according to Claim 4, **characterized in that** the motion-instigating means (34) are capable of moving the pivot connection (130) substantially towards the chassis (30) of the vehicle (1).

6. Pretensioner device (32) according to any one of the preceding claims, **characterized in that** it is capable of being fitted to a safety belt (2) in which the lower end (22) of the strap (6) is a closed loop, capable of sliding along the said guide ramp (24).

7. Pretensioner device (32) according to any one of Claims 1 to 5, **characterized in that** it comprises retaining means (38) for retaining a free part (22a) of an open loop that constitutes the lower end (22) of the strap (6), the said retaining means (38) being secured to the free part (22a) of the loop and able to be prevented from translational movement with respect to the said seat (2) of the vehicle (1) when the strap (6) is tensioned by the motion-instigating means (34) of the device (32).

8. Pretensioner device (32) according to Claim 7, **characterized in that** the retaining means (38) comprise a projecting member capable of automatically engaging in a groove (40) made in the said seat (2) of the vehicle (1) when the open loop that constitutes the lower end (22) of the strap (6) slides along the said guide ramp (24).

9. Pretensioner device (32) according to Claim 7 or Claim 8, **characterized in that** the retaining means (38) are secured to a flexible portion (42) in the form of an open loop espousing the lower end (22) of the strap (6) of the safety belt (4).

10. Pretensioner device (32) according to any one of the preceding claims, **characterized in that** the motion-instigating means (34) are pyrotechnic actuation means.

11. Safety belt (4) for a seat (2) of a motor vehicle (1), **characterized in that** it is equipped with a pretensioner device (32) according to any one of the preceding claims.

12. Motor vehicle (1) **characterized in that** it is equipped with at least one pretensioner device (32) according to any one of Claims 1 to 10.

## Patentansprüche

1. Vorspannvorrichtung (32) eines Sicherheitsgurts (4) eines Sitzes (2) eines Kraftfahrzeugs (1), wobei der Gurt (4) einen Spanngurt (6) aufweist, von dem ein unteres Ende (22) geeignet ist, um entlang einer Führungsrampe (24) verschoben zu werden, **dadurch gekennzeichnet, dass** die Vorrichtung (32) Mittel (34) aufweist, um die Führungsrampe (24) in Bewegung zu versetzen, die ein derartiges Schwenken der Rampe (24) erzeugen können, dass ein Spannen des Spanngurts (6) des Sicherheitsgurts (4) bewirkt wird.

2. Vorspannvorrichtung (32) nach Anspruch 1, **dadurch gekennzeichnet, dass** die Mittel zum In-Bewegung-Versetzen (34) geeignet sind, um die Führungsrampe (24) durch Verschieben einer Drehgelenkverbindung (30) in Bewegung zu versetzen, die sich zwischen dem Sitz (2) und Anschlagmitteln (28) des unteren Endes (22) des Spanngurts (6) befindet, wobei die Anschlagmittel (28) auf ein vorderes Ende (24b) der Führungsrampe (24) mittels einer Gleitschienenverbindung montiert sind und ein hinteres Ende (24a) der Führungsrampe (24) auf den Aufbau des Fahrzeugs (1) mittels einer Verbindung (26) montiert ist, die mindestens einen Drehfreiheitsgrad aufweist.

3. Vorspannvorrichtung (32) nach Anspruch 2, **dadurch gekennzeichnet, dass** die Mittel zum In-Bewegung-Versetzen (34) geeignet sind, um die Drehgelenkverbindung (30) im Wesentlichen in Richtung des Fahrgestells (31) des Fahrzeugs (1) zu verschieben.

4. Vorspannvorrichtung (32) nach Anspruch 1, **dadurch gekennzeichnet, dass** die Mittel zum In-Bewegung-Versetzen (34) geeignet sind, um die Führungsrampe (24) durch Verschieben einer Drehgelenkverbindung (130) in Bewegung zu versetzen, die sich zwischen dem Sitz (2) und einem vorderen Ende (24b) der Führungsrampe (24) befindet, wobei ein Führungsorgan (128) dann einerseits mittels einer Gleitschienenverbindung auf ein hinteres Ende (24a) der Führungsrampe (24) und andererseits mittels einer Verbindung (126) auf den Aufbau des Fahrzeugs (1) montiert ist, die mindestens einen Drehfreiheitsgrad aufweist.

5. Vorspannvorrichtung (32) nach Anspruch 4, **dadurch gekennzeichnet, dass** die Mittel zum In-Bewegung-Versetzen (34) geeignet sind, um die Drehgelenkverbindung (130) im Wesentlichen in Richtung des Fahrgestells (30) des Fahrzeugs (1) zu verschieben.

6. Vorspannvorrichtung (32) nach einem der vorhergehenden Ansprüche, **dadurch gekennzeichnet, dass** sie einen Sicherheitsgurt (2) ausstatten kann, bei dem das untere Ende (22) des Spanngurts (6) eine geschlossene Schleife ist, die entlang der Führungsrampe (24) gleiten kann.

7. Vorspannvorrichtung (32) nach einem der Ansprüche 1 bis 5, **dadurch gekennzeichnet, dass** sie Rückhaltemittel (38) eines freien Teils (22a) einer offenen Schleife aufweist, die das untere Ende (22) des Spanngurts (6) bildet, wobei die Rückhaltemittel (38) fest mit dem freien Teil (22a) der Schleife verbunden und geeignet sind, beim Spannen des Spanngurts (6), das durch die Mittel zum In-Bewegung-Versetzen (34) der Vorrichtung (32) bewirkt wird, in Translationsrichtung bezüglich des Sitzes (2) des Fahrzeugs (1) blockiert zu werden.

8. Vorspannvorrichtung (32) nach Anspruch 7, **dadurch gekennzeichnet, dass** die Rückhaltemittel (38) ein vorstehendes Organ aufweisen, das geeignet ist, sich beim Gleiten der offenen Schleife, die das untere Ende (22) des Spanngurts (6) bildet, entlang der Führungsrampe (24) automatisch in eine Rille (40) einzuführen, die im Sitz (2) des Fahrzeugs (1) ausgebildet ist.

9. Vorspannvorrichtung (32) nach Anspruch 7 oder Anspruch 8, **dadurch gekennzeichnet, dass** die Rückhaltemittel (38) fest mit einem elastischen Abschnitt (42) in Form einer offenen Schleife verbunden sind, der sich an das untere Ende (22) des Spanngurts (6) des Sicherheitsgurts (4) anpasst.

10. Vorspannvorrichtung (32) nach einem der vorhergehenden Ansprüche, **dadurch gekennzeichnet, dass** die Mittel zum In-Bewegung-Versetzen (34) pyrotechnische Betätigungsmittel sind.

11. Sicherheitsgurt (4) für einen Sitz (2) eines Kraftfahrzeugs (1), **dadurch gekennzeichnet, dass** er mit einer Vorspannvorrichtung (32) nach einem der vorhergehenden Ansprüche ausgestattet ist.

12. Kraftfahrzeug (1), **dadurch gekennzeichnet, dass** es mit mindestens einer Vorspannvorrichtung (32) nach einem der Ansprüche 1 bis 10 ausgestattet ist.
